**Europäisches Patentamt**

**European Patent Office**

**Office européen des brevets**

(19)

(11) Veröffentlichungsnummer : **0 465 891 B1**

# (12) EUROPÄISCHE PATENTSCHRIFT

(45) Veröffentlichungstag der Patentschrift :
**29.12.93 Patentblatt 93/52**

(21) Anmeldenummer : **91110206.9**

(22) Anmeldetag : **21.06.91**

(51) Int. Cl.⁵ : **C08G 18/38,** C08J 9/00,
// (C08G18/38, 101:00)

(54) **Verfahren zur Herstellung von heisshärtenden Polyurethan-Weichformschaumstoffen und deren Verwendung als Polstermaterial.**

(30) Priorität : **04.07.90 DE 4021327**

(43) Veröffentlichungstag der Anmeldung :
**15.01.92 Patentblatt 92/03**

(45) Bekanntmachung des Hinweises auf die
Patenterteilung :
**29.12.93 Patentblatt 93/52**

(84) Benannte Vertragsstaaten :
**DE ES FR GB IT**

(56) Entgegenhaltungen :
**FR-A- 2 247 485**
**US-A- 4 355 118**

(73) Patentinhaber : **BAYER AG**
**D-51368 Leverkusen (DE)**

(72) Erfinder : **Brock, Martin, Dr.**
**Ulmenweg 3**
**W-6823 Neulussheim (DE)**

**Beschreibung**

Die Erfindung betrifft ein Verfahren zur Herstellung von offenzelligen heißhärtenden Polyurethan-Weichformschaumstoffen unter Verwendung von zellöffnend wirkenden wäßrigen Silikat-Lösungen.

Die Verwendung von wäßrigen Silikatlösungen bei der Herstellung von Kunststoffen (sog. anorganisch-organischen Kunststoffen) ist bekannt (vergl. z.B. DE-OS 2 227 147 und 2 325 090).

Der erfindungsgemäße Einsatz von wäßrigen Alkalisilikatlösungen als Zellöffner bei der Herstellung von heißhärtenden Polyurethan-Weichformschaumstoffen ist indessen neu.

Bei der Herstellung von heißhärtenden Polyurethan-Weichformschaumstoffen ist es besonders wichtig, auf eine hohe Offenzelligkeit zu achten. Durch den Ausheizprozeß (ca. 150°C) sind die Schaumstoffe derart ausreagiert, daß im Gegensatz zu Kaltformschaumstoffen ein nachträgliches mechanisches Aufdrücken der Zellen nicht mehr möglich ist.

Die Offenzelligkeit hat Einfluß auf

- Schaumstoffhärte
- Luftzirkulation und damit Sitzklima
- Elastizität und Dämpfung

Gemäß dem Stand der Technik wird die Offenzelligkeit durch die Konzentration des vernetzenden Katalysators, z.B. Sn-Salze höherer Carbonsäuren, bestimmt. Andere, jedoch unzuverlässige Verfahren verwenden entschäumende Silikonöle oder in bestimmten Temperaturbereichen schmelzende Wachse als Zellöffner

Überraschend wurde gefunden, daß die Verwendung von wäßrigen Alkalisilikat-Lösungen zu offenzelligen Weichschaumstoffen mit hervorragender Eigenschaften führt.

Die Beispiele 1 - 7 zeigen, daß die wäßrige Silikatlösung die Wirkung des sehr stark zellschließenden Zn-Katalysators kompensieren kann, so daß offenzellige Schaumstoffe resultieren.

Der Einsatz der Silikatlösung ermöglicht somit

- eine hohe Offenzelligkeit der Schaumstoffe und
- eine selektive Beeinflussung des Reaktionsablaufes bei der Schäumung, denn vernetzend wirkende Katalysatoren können in ihrer Wirkung auf die Geschlossenzelligkeit nun überkompensiert werden.

Eine selektive Katalyse ist interessant, wenn man z.B. die Urethan-Reaktion gegenüber der Harnstoffbildung beschleunigen möchte. Dadurch können physikalische Werte, wie vor allem Härte, verändert werden (vgl. Beispiele 1 und 2).

Darüber hinaus sind die Silikatlösungen geruchsneutral und ökologisch unbedenklich.

Gegenstand der Erfindung ist ein Verfahren zur Herstellung von offenzelligen heißhärtenden Polyurethan-Weichformschaumstoffen durch Umsetzung von

a) Polyisocyanaten mit

b) mindestens zwei gegenüber Isocyanaten aktive Wasserstoffatome aufweisenden Polyethern vom Molekulargewicht 400 bis 10 000 in Gegenwart von

c) Wasser und

d) zellöffnenden Substanzen und gegebenenfalls in Gegenwart von

e) organischen Treibmitteln und Katalysatoren sowie gegebenenfalls in Gegenwart von

f) Verbindungen mit mindestens zwei gegenüber Isocyanaten reaktionsfähigen Wasserstoffatomen mit einem Molekulargewicht von 32 bis 399 und

g) an sich bekannten oberflächenaktiven und flammhemmenden Zusatzstoffen und weiteren an sich bekannten Hilfsmitteln,

in einer geschlossenen Form, das dadurch gekennzeichnet ist,

daß als zellöffnende Substanz eine wäßrige Alkalisilikatlösung in einer Menge (berechnet auf Silicium) von 0,001 - 0,9 Gew-%, vorzugsweise 0,05 -0,2 Gew.-%, (bezogen auf Komponente b) verwendet wird.

Erfindungsgemäß bevorzugt ist, daß für die Herstellung der heißhärtenden Weichformschaumstoffe zwei- oder vierwertige Organo-Metallverbindungen, vorzugsweise Zinn (II)-Salze höherer Carbonsäuren, als Katalysatoren mitverwendet werden.

Die Erfindung betrifft auch die Verwendung der so hergestellten heißhärtenden Polyurethan-Weichformschaumstoffe als Sitz-, Lehnen- und Kopf- Polstermaterial.

Für die Durchführung des erfindungsgemäßen Verfahrens werden verwendet:

a) Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden beispielsweise solche der Formel

$$Q(NCO)_n$$

in der

$n$ = 2 bis 5, vorzugsweise 2 bis 3 und

Q = einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen bedeuten, z.B. solche Polyisocyanate, wie sie in der DE-OS 2 832 253, Seiten 10 bis 11, beschrieben werden. Besonders bevorzugt werden in der Regel die technisch leicht zugänglichen Polyisocyanate, z.B. das 2,4- und 2,5-Toluylendiisocyanat, sowie beliebige Gemische dieser Isomeren ("TDI").
Bevorzugt ist auch die Verwendung von monomeren und polymeren Diphenylmethandiisocyanaten bzw. deren Abmischung mit TDI.

b) Ausgangskomponenten sind ferner mindestens zwei aktive Wasserstoffatome, vorzugsweise Hydroxylgruppen aufweisende Polyether, in der Regel auf Basis von Propylenoxid oder Propylenoxid/Ethylenoxid-Gemischen, mit einem Molekulargewicht in der Regel von 400 bis 10 000. Diese Polyether können anteilig noch andere Alkylenoxidreste enthalten. Es handelt sich hierbei um an sich bekannte, höhermolekulare Polyether.

c) Als Treibmittel wird Wasser in der Regel in einer Menge von 0,5 - 10 Gew.-Tln., bezogen auf 100 Gew.-Tln. der Komponente b), verwendet.

d) Erfindungsgemäß wird ferner eine wäßrige Alkalisilikatlösung oder ein alkalisch stabilisiertes Kieselsol in der Regel [mit einem Gehalt an anorganischem Feststoff von 5 - 80 Gew.-%, vorzugsweise 15 - 60 Gew.-%, eingesetzt. Oftmals werden die vorgenannten wäßrigen basischen Lösungen oder Suspensionen auch in Kombination eingesetzt.

Unter wäßrigen Lösungen von Alkalisilikaten sind die üblicherweise als "Wasserglas" bezeichenten Lösungen von Natrium- und/oder Kaliumsilikat in Wasser zu verstehen. Es können auch rohe technische Lösungen, welche zusätzlich z.B. Calciumsilikat, Magnesiumsilikat, Borate und Aluminate erhalten können, Verwendung finden.

Das molare Verhältnis $Me_2O/SiO_2$ (Me = Alkalimetall, z.B. Na, K.) ist nicht kritisch und kann in den üblichen Grenzen schwanken; vorzugsweise berägt es 1 : 1,6 bis 1 : 3,3. Vorzugsweise werden 32 - 54 Gew.-%ige Silikatlösungen eingesetzt, die nur bei hinreichender Alkalität eine vorteilhafte Viskosität von unter 500 Poise aufweisen. Auch Ammoniumsilikatlösungen, z.B. Lösungen von Guanidiniumsilikat, können verwendet werden, allerdings sind diese weniger bevorzugt. Es kann sich um echte oder auch um kolloide Lösungen handeln.

Oft werden aber auch konzentrierte Silikatlösungen verwendet, die erforderlichenfalls durch Zusatz von Alklihydroxid auf niedrige Viskosität eingestellt werden. Auf diese Weise lassen sich 40 - 70 Gew.-%ige Lösungen herstellen. Andererseits werden vielfach Silikatlösungen mit 30 - 35 Gew.-%igem Gehalt bevorzugt, die niedrige Viskositäten aufweisen und somit gut verarbeitbar sind.

e) Gegebenenfalls werden organische Treibmittel und aminische bzw. metallorganische Katalysatoren, wie sie an sich bekannt sind, vorzugsweise organische Sn(II)- und/oder Sn(IV)-Verbindungen, insbesondere Sn(II)-Salze höherer Carbonsäuren, mitverwendet.

f) Gegebenenfalls kommen als Ausgangskomponenten Verbindungen mit mindestens zwei gegenüber Isocyanaten reaktionsfähigen Wasserstoffatomen und einem Molekulargewicht von 32 bis 399 infrage. Man versteht hierunter Hydroxylgruppen und/oder Aminogruppen und/oder Thiolgruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8 vorzugsweise 2 bis 4, gegenüber Isocyanaten reaktionsfähige Wasserstoffatome auf, Beispiele hierfür werden in der DE-OS 2 832 253, Seiten 19 - 20 beschrieben.

g) Ferner werden gegebenenfalls oberflächenaktive und flammhemmende Zusatzstoffe und weitere an sich bekannte Hilfsmittel mitverwendet, z.B.

a) Emulgatoren und Schaumstabilisatoren,

b) Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß-oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B.

EP 0 465 891 B1

auf den Seiten 103 bis 113, beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtung bedient, z.B. solcher, die in der US-PS 2 764 565 beschrieben werden. Diese Umsetzung erfolgt in geschlossenen Formen. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die nach der Erfindung erhältlichen Weichformschaumstoffe finden vorzugsweise als Sitz-, Lehnen- oder Polstermaterial Anwendung.

Ausführungsbeipiele

| Polyether : | Glyzerin-gestarteter trifunktioneller, langkettiger PO/EO-Polyether (ca. 10 % EO, OHZ 50, Molekulargewicht ca. 3.900) |
| Schaum-Stabilisator : | OS 32 (Handelsprodukt der Bayer AG) |
| Katalysator 1: | Bis-N,N'-dimethylamino-diethylether 70 %ig in Dipropylenglykol |
| Katalysator 2: | Zinn(II)-octoat 20 %ig in Polyether |
| Zellöffner : | basische wäßrige Natriumsilikatlösung mit 12 Gew.-% Silicium und 6 Gew.-% Natrium |
| T 80/T 65 : | Toluylendiisocyanat, Gemisch aus 2,4- und 2,6-Isomeren im Gewichtsverhältnis 80 : 20 % bzw. 65:35 %. |

Alle Komponente werden intensiv vermischt und in einer geschlossenen Form verschäumt. Einzelheiten über die angewandten Rezepturen und physikalischen Daten der erhaltenen Weichformschaumstoffe gibt die Tabelle wieder.

EP 0 465 891 B1

Tabelle

| Beispiel | 1 | 2 | 3 | 4 | 5 | 6 | 7 |
|---|---|---|---|---|---|---|---|
| Polyether *) | 100 | 100 | 100 | 100 | 100 | 100 | 100 |
| Wasser *) | 3,5 | 3,5 | 3,5 | 3,5 | 3,5 | 3,5 | 3,5 |
| Stabilisator *) | 1,0 | 1,0 | 1,0 | 1,0 | 1,0 | 1,0 | 1,0 |
| Katalysator 1*) | 0,1 | 0,1 | 0,1 | 0,1 | 0,1 | 0,1 | 0,1 |
| Katalysator 2*) | 0,06 | 0,07 | 0,07 | 0,28 | 0,3 | 0,4 | 0,45 |
| Zellöffner *) | - | 0,08 | - | - | 0,05 | 0,1 | 0,5 |
| T 80 **) | x | x | x | - | - | - | - |
| T 65 **) | - | - | - | x | x | x | x |
| KZ 100 | x | x | x | x | x | x | x |
| Rohdichte (kg/m$^3$) | 30 | 30 | | | | | |
| Stauchhärte (kPa) 40 % Kompression | 3,3 | 2,8 | | | | | |
| Geschlossenzellig- zeit ***) | offen | offen | leicht geschl. | offen****) | offen | offen | offen |

&ast;) Gew.-Tle.
&ast;&ast;) Menge gemäß Kennzahl
&ast;&ast;&ast;) Geschlossenzelligkeit ist eine Bewertung, die über den Grad der Luftdurchlässigkeit (1/cm$^2$) ermittelt wird. Hohe Werte bedeuten offene, niedrige Werte geschlossene Schaumstoffe.
&ast;&ast;&ast;&ast;) Schaumstörungen in den Ecken

EP 0 465 891 B1

## Patentansprüche

1. Verfahren zur Herstellung von heißhärtenden offenzelligen Polyurethan-Weichformschaumstoffen durch Umsetzung von
   a) Polyisocyanaten mit
   b) mindestens zwei gegenüber Isocyanaten aktive Wasserstoffatome aufweisenden Polyethern vom Molekulargewicht 400 bis 10 000 in Gegenwart von
   c) Wasser und
   d) zellöffnenden Substanzen und gegebenenfalls in Gegenwart von
   e) organischen Treibmitteln und Katalysatoren sowie gegebenenfalls in Gegenwart von
   f) Verbindungen mit mindestens zwei gegenüber Isocyanaten reaktionsfähigen Wasserstoffatomen mit einem Molekulargewicht von 32 bis 399 und
   g) an sich bekannten oberflächenaktiven und flammhemmenden Zusatzstoffen und weiteren an sich bekannten Hilfsmitteln,
   in einer geschlossenen Form
   dadurch gekennzeichnet,
   daß als zellöffnende Substanz eine wäßrige Alkalisilikatlösung in einer Menge (berechnet auf Silicium) von 0,001 - 0,9 Gew.-% (bezogen auf Komponente b) verwendet wird.

2. Verfahren nach Anspruch 1, dadurch gekennzeichnet, daß für die Herstellung der heißhärtenden Weichformschaumstoffe zwei- oder vierwertige Organo-Metallverbindungen, vorzugsweise Zinn(II)-Salze höherer Carbonsäuren, als Katalysatoren mitverwendet werden.

3. Verwendung der heißhärtenden Polyurethan-Weichformschaumstoffe gemäß Anspruch 1 und 2 als Sitz-, Lehnen- und Kopf- Polstermaterial


## Claims

1. Process for the preparation of heat-curing open-cell flexible polyurethane foams by reaction of
   a) polyisocyanates with
   b) polyethers of molecular weight 400 to 10,000 which contain at least two hydrogen atoms which are active towards isocyanates, in the presence of
   c) water and
   d) cell-opening substances, and if appropriate in the presence of
   e) organic blowing agents and catalysts, and if appropriate in the presence of
   f) compounds with a molecular weight of 32 to 399 having at least two hydrogen atoms which are reactive towards isocyanates and
   g) surface-active and flame-retardant additives which are known per se and other auxiliaries which are known per se,
   in a closed mould,
   characterized in that an aqueous alkali metal silicate solution is used as the cell-opening substance in an amount (calculated with respect to silicon) of 0.001 - 0.9% by weight (based on component b).

2. Process according to Claim 1, characterized in that di- or tetravalent organometallic compounds, preferably tin(II) salts of higher carboxylic acids, are co-used as catalysts for the preparation of the thermosetting flexible foams.

3. Use of the heat-curing flexible polyurethane foams according to Claim 1 and 2 as seat, backrest and head upholstery material.


## Revendications

1. Procédé de fabrication de mousses moulables de polyuréthanne flexibles et thermodurcissables, à cellules ouvertes, par réaction
   a) de polyisocyanates avec
   b) des polyéthers présentant au moins deux atomes d'hydrogène actifs vis-à-vis d'isocyanates, de poids moléculaire allant de 400 à 10 000, en présence

c) d'eau et

d) de substances ouvrant les cellules et, le cas échéant, en présence

e) d'agents porogènes organiques et de catalyseurs ainsi que, le cas échéant, en présence

f) de composés portant au moins deux atomes d'hydrogène aptes à réagir vis-à-vis d'isocyanates, ayant un poids moléculaire de 32 à 399 et

g) d'additifs tensio-actifs et retardateurs de flamme connus ainsi que d'autres substances auxiliaires connues,

   dans un moule fermé,

caractérisé en ce qu'on utilise comme substance ouvrant les cellules une solution aqueuse d'un silicate alcalin en une quantité (calculée par rapport au silicium) de 0,001 à 0,9 % en poids (calculée par rapport au composant b).

2. Procédé suivant la revendication 1, caractérisé en ce qu'on utilise en même temps comme catalyseurs pour la fabrication des mousses moulables flexibles thermodurcissables, des composés organométalliques divalents ou tétravalents, de préférence des sels d'étain (II) d'acides carboxyliques supérieurs.

3. Utilisation des mousses moulables flexibles thermodurcissables de polyuréthanne suivant les revendications 1 et 2 comme matériau de rembourrage pour sièges, dossiers et appuis-tête.